(19) Europäisches Patentamt / European Patent Office / Office européen des brevets

(11) **EP 3 704 293 B1**

(12) **EUROPEAN PATENT SPECIFICATION**

(45) Date of publication and mention
of the grant of the patent:
**23.11.2022 Bulletin 2022/47**

(21) Application number: **17931009.9**

(22) Date of filing: **31.10.2017**

(51) International Patent Classification (IPC):
**D04H 3/147** (2012.01)   **D04H 3/009** (2012.01)
**D04H 3/011** (2012.01)   **B32B 5/02** (2006.01)
**B32B 5/26** (2006.01)

(52) Cooperative Patent Classification (CPC):
**D04H 3/147; B32B 3/00; B32B 5/022; B32B 5/26;
B32B 7/12; B32B 27/12; D04H 3/009; D04H 3/011;**
B32B 2250/02; B32B 2250/05; B32B 2250/20;
B32B 2250/40; B32B 2260/021; B32B 2260/046;
B32B 2262/0253;                              (Cont.)

(86) International application number:
**PCT/CN2017/108586**

(87) International publication number:
**WO 2019/084774 (09.05.2019 Gazette 2019/19)**

(54) **BICOMPONENT SPUNBOND NONWOVEN FABRIC AND NONWOVEN COMPOSITE MADE THEREFOF**

BIKOMPONENTENSPINNVLIESSTOFF UND DARAUS HERGESTELLTER VLIESSTOFF

NONTISSÉ FILÉ-LIÉ À DEUX CONSTITUANTS ET COMPOSITE NON TISSÉ FABRIQUÉ À PARTIR DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.09.2020 Bulletin 2020/37**

(73) Proprietor: **Dow Global Technologies LLC
Midland, MI 48674 (US)**

(72) Inventors:
• **ZHOU, Yuxiang
Shanghai 201203 (CN)**
• **DUAN, Wei
Shanghai 201203 (CN)**

(74) Representative: **Boult Wade Tennant LLP
Salisbury Square House
8 Salisbury Square
London EC4Y 8AP (GB)**

(56) References cited:
WO-A1-2006/053297     WO-A2-2010/009024
KR-A- 20120 033 771     US-A1- 2005 020 172

(52) Cooperative Patent Classification (CPC): (Cont.)
B32B 2262/0276; B32B 2262/101; B32B 2262/12;
B32B 2262/14; B32B 2307/558; B32B 2307/718;
B32B 2307/732; B32B 2437/02; B32B 2605/00

**Description**

## TECHNICAL FIELD

The disclosure herein is related to a spundbond nonwoven fabric and a nonwoven composite made thereof.

## BACKGROUND

Bicomponent spunbond nonwoven fabrics composed of fibers having sheath/core configuration are well known in the art, for example, the sheath/core configuration is polyethylene/polyethylene terephthalate(PE/PET), polyethylene/polyamide(PE/PA), polyethylene/polypropylene(PE/PP), or polypropylene/polyamide(PP/PA).

US 2005/020172 A1 describes a spunbond nonwoven with filaments having a sheath comprising a blend of polyethylene and ethyl (meth)acrylic acid copolymer ionomer and a core comprising polyamide.

However, since the polymers used for the sheath and for the core are lack of affinity/compatibility with each other, the puncture resistance of the spunbond nonwoven fabric, is limited, particularly in the low temperature environment. There remains a need for nonwoven fabrics that have improved puncture resistance , especially improved puncture resistance at the temperature of about -40-0°C.

Composites comprising bicomponent spunbond nonwoven fabrics can be used as the automotive bumpers or underbody shield, or parts of sport gears such as like elbow guards, shin guards, and surf board, or equipment need to be used in cold weathers, for examples, skiing equipment such as ski board, snow sledge, or ski helmet. These applications also require the nonwoven composites having good impact resistance, especially good impact resistance in cold weathers, such as at temperature of about -40-0°C.

## SUMMARY

Provided herein is a spunbond nonwoven fabric comprising a plurality of continuous bicomponent fibers having a sheath/core configuration, wherein the sheath/core configuration consists of two polymers, wherein the first polymer is an ionomer of ethylene/(meth)acrylic acid copolymer that forms the sheath and the second polymer is a polyamide that forms the core.

Further provided herein is a nonwoven composite made thereof.

In accordance with the present disclosure, when a range is given with two particular end points, it is understood that the range includes any value that is within the two particular end points and any value that is equal to or about equal to any of the two end points.

## DETAILED DESCRIPTION

Unless otherwise defined, all technical and scientific terms used herein have the same meaning as commonly understood by one of ordinary skill in the art to which this disclosure belongs. In case of conflict, the specification, including definitions, will control.

Although methods and materials similar or equivalent to those described herein can be used in the practice or testing of the disclosure, suitable methods and materials are described herein.

Unless stated otherwise, all percentages, parts, ratios, etc., are by weight.

When an amount, concentration, or other value or parameter is given as either a range, preferred range or a list of lower preferable values and upper preferable values, this is to be understood as specifically disclosing all ranges formed from any pair of any lower range limit or preferred value and any upper range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

When the term "about" is used in describing a value or an end-point of a range, the disclosure should be understood to include the specific value or end-point referred to.

As used herein, the terms "comprises," "comprising," "includes," "including," "containing," "characterized by," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or.

The transitional phrase "consisting essentially of" limits the scope of a claim to the specified materials or steps and those that do not materially affect the basic and novel characteristic(s) of the claimed invention. Where applicants have defined an invention or a portion thereof with an open-ended term such as "comprising," unless otherwise stated the description should be interpreted to also describe such an invention using the term "consisting essentially of".

Use of "a" or "an" are employed to describe elements and components of the invention. This is merely for convenience and to give a general sense of the invention. This description should be read to include one or at least one and the singular also includes the plural unless it is obvious that it is meant otherwise.

The materials, methods, and examples herein are illustrative only and, except as specifically stated, are not intended to be limiting. Although methods and materials similar or equivalent to those described herein can be used in the practice or testing of the present disclosure, suitable methods and materials are described herein.

The disclosure is described in detail here below.

Spunbond Nonwoven Fabric

The spunbond nonwoven fabric in the present invention comprising a plurality of bicomponent continuous fibers having a sheath/core configuration, wherein the sheath/core configuration consists of two polymers, wherein the first polymer is an ionomer of ethylene/(meth)acrylic acid copolymer that forms the sheath and the second polymer is a polyamide that forms the core.

In the present invention, the term "bicomponent continuous fiber" refers to a fiber comprising a pair of polymer compositions intimately adhered to each other along the length of the fiber, and form a sheath-core configuration in cross-section. The bicomponent sheath-core configuration can be round, trilobal, pentalobal, octalobal, dumbbell-shaped, island-in-the-sea or star shaped in cross section, as long as the core positioned in the interior and is surrounded by the sheath, both of which extend substantially the entire length of the fibers. Usually the sheath has a melting temperature lower than that of the core. The term "continuous fiber" refers to a fiber of indefinite or extreme length. In practice, there could be one or more breaks in the "continuous fiber" due to manufacturing process, but a "continuous fiber" is distinguishable from a staple fiber which is cut to a predetermined length. In one embodiment, the bicomponent continuous fiber has an average fiber diameter of about 1-100 $\mu$m, or about 2-50 $\mu$m.

In the bicomponent continuous fiber of the present invention, ionomer of ethylene/(meth)acrylic acid copolymer forms the sheath and polyamide forms the core. The weight ratio between the sheath and the core of the disclosed bicomponent continuous fiber ranges from about 20:80 to about 50:50, preferably from about 30:70 to about 45:55.

Ionomer of ethylene/(meth)acrylic acid copolymer used herein is the copolymer of ethylene and (meth)acrylic acid, wherein the acid content in monomer of the ionomer of ethylene/(meth)acrylic acid copolymer ranges from about 1 weight% to about 20 weight%, and the acid groups are neutralized by sodium cations or zinc cations with neutralization level ranging from about 0.1% to about 60%. Further, ionomer of ethylene/(meth)acrylic acid copolymer used herein has a melt flow rate (MFR) of about 12-60 g/10 min, as measured in accordance with ASTM D1238 at 190°C with a 2160 g load. Ionomer of ethylene/(meth)acrylic acid copolymer suitable for use in the present invention is available commercially from a number of sources and includes Surlyn® ionomer resin, available from E.I. du Pont de Nemours and Company (hereafter "DuPont").

Polyamide used herein is the polymer containing recurring amide (-CONH-) groups, and is prepared by copolymerizing one or more dicarboxylic acids with one or more diamines, or prepared by ring opening polymerization of lactam monomer such as caprolactam. Polyamide used herein is selected from the group consisting of polyamide 6, polyamide 66, polyamide 610, polyamide 612, and other polyamides suitable for fiber spinning, and blends thereof. In one embodiment, polyamide used herein is selected from the group consisting of polyamide 6, polyamide 66, and blends thereof. Polyamide suitable for use in the present invention is available commercially from a number of sources and includes Zytel® resin, available from DuPont.

The sheath and/or core of the bicomponent continuous fiber may include other conventional additives such as dyes, pigments, antioxidants, ultraviolet stabilizers, spin finishes, and the like.

The spunbond nonwoven fabric disclosed herein can be prepared using spunbond method known in the art. The spunbond nonwoven fabric are formed by laying the bicomponent continuous fibers described above randomly on a collecting surface such as a foraminous screen or belt. The spunbond nonwoven fabrics are generally bonded by methods known in the art such as by hot-roll calendering or by passing the fabric through a saturated-steam chamber at an elevated pressure.

The bicomponent continuous fiber can be prepared using either pre-coalescent dies, wherein the distinct polymeric components are contacted prior to extrusion from the extrusion orifice, or post-coalescent dies, in which the distinct polymeric components are extruded through separate extrusion orifices and are contacted after exiting the capillaries to form the bicomponent fibers. For example, first, the two polymers, ionomer of ethylene/(meth)acrylic acid copolymer and polyamide, are dried at a temperature of 65°C and 80°C respectively to a moisture content of less than 200 ppm. After drying, the two polymers are separately extruded at a temperature above their melting point and below the lowest decomposition temperature. Ionomer of ethylene/(meth)acrylic acid copolymer can be extruded at 180-250 °C and polyamide at 250-280 °C. After extrusion, the two polymers are metered to a spin-pack assembly, where the two melt streams are separately filtered and then combined through a stack of distribution plates to provide multiple rows of sheath-core fiber cross-sections. The spin-pack assembly is kept at 250-280 °C. Ionomer of ethylene/(meth)acrylic acid copolymer and polyamide can be spun through each capillary and combined and ejected together at the spinnerets of concentric design, giving bicomponent continuous fibers having a sheath/core configuration.

The bicomponent continuous fibers exiting the spinnerets are collected on a forming belt to form a spunbond nonwoven fabric. Vacuum can be applied underneath the belt to help pin the nonwoven fabric to the belt. The speed of the belt can be varied to obtain nonwoven fabrics of various basis weights. In one embodiment, the spunbond nonwoven fabric has a basis weight of about 10-1000 g/m$^2$.

The spunbond nonwoven fabric can be thermally bonded using methods known in the art. In one embodiment, the spunbond nonwoven fabric is thermally bonded with a discontinuous pattern of points, lines, or other pattern of intermittent bonds using methods known in the art. Intermittent thermal bonds can be formed by applying heat and pressure at discrete spots on the surface of fabric, for example by passing the layered structure through a nip formed by a patterned calender roll and a smooth roll, or between two patterned rolls. The roll is heated to thermally bond the fabric. The bonding roll pattern may be any of those known in the art, and preferably is a pattern of discrete point or line bonds. The spunbond nonwoven fabric can also be thermally bonded using ultrasonic energy, for example by passing the web between a horn and a rotating anvil roll, for example an anvil roll having a pattern of protrusions on the surface thereof. Alternately, the spunbond nonwoven fabric can be bonded using through-air bonding methods known in the art, wherein heated gas such as air is passed through the fabric at a temperature sufficient to bond the fibers together where they contact each other at their cross-over points while the fabric is supported on a porous surface.

Nonwoven Composite

Further disclosed herein is a nonwoven composite comprising or produced from the spunbond nonwoven fabric described above.

In one embodiment, the nonwoven composite comprises at least 2 layers of the spunbond nonwoven fabric, or 2-100 layers of the spunbond nonwoven fabric. Single layer of spunbond nonwoven fabrics were stacked on top of one another. Each layer of these nonwoven fabrics had the dominant orientation in the machine direction. In order to get balanced structures, fiber orientation in these laminates was configured by simply rotating each layer with respect to its dominant orientation and placing it on top of the previous layer. A platen pressing machine can be used to produce nonwoven composite. The cross-layered fabrics are sandwiched between release papers and placed between the upper and lower plates. The release papers are used to prevent the sample from sticking to the hot plates. The upper plate or the lower plate or both are set at a temperature between the melting temperature of the ionomer and polyamide, like 100-200 °C, such as at 140 °C. The pressure should be set at 0.5 to 10 MPa (5-100 bars), such as at 4 MPa (40 bars). The pressing time duration should be long enough to allow the ionomer sheath to completely melt and fill all the pores in between the nonwoven fabrics to form a continuous matrix, but without being too long to cause the oxidation or degradation of the ionomer or polyamide, such as 10 min. After heating, the hot sample can be transferred between two cold plates, allowing it to cool and solidify. A hot rolling line can also be used to produce nonwoven composite, where the cross-layered fabrics can be transported on a conveying belt through a pair of nip rolls heated at a temperature between the melting temperature of the ionomer and polyamide, like 100-200 °C, such as at 140 °C. Optionally, a heating tunnel can be equipped before the nip rolls, setting at a temperature close or equal to that of the nip rolls, such as 140 °C, so that the nonwovens can be preheated before being hot pressed by the nip rolls. The pressure of the nip roll should be set at a value sufficient to press all the nonwoven layers together, leaving no voids inside the produced composite sheet.

The preferred thickness of the nonwoven composite sheet is about 1 mm-10 mm, which means about 20-200 layer of nonwoven fabrics with basis weight of about 50 g/m$^2$, or about 10-100 layers of nonwoven fabrics with basis weight of about 100 g/m$^2$, or about 5-50 layers of nonwoven fabrics with basis weight of about 200 g/m$^2$

In another embodiment, the nonwoven composite comprises a substrate and at least one layer of the bicomponent spunbond nonwoven fabric having a first side and a second side, wherein the substrate layer is bonded to the first side of the bicomponent spunbond nonwoven fabric. Optionally, the nonwoven composite comprises more than one layer of the bicomponent spunbond nonwoven fabric on one side or both sides of the substrate. The spunbond nonwoven layer can help to improve the surface impact resistance of the substrate. The substrate can be a glass fiber reinforced thermoplastic sheet, which is produced by hot pressing the comingled glass fibers and polymeric fibers to allow the polymeric fibers to melt and fuse the glass fibers together. For examples, the substrate can be a glass fiber reinforced polypropylene sheet. The substrate can also be a glass fiber reinforced thermoset composite sheet, which is produced by impregnating the glass fibers with epoxy, phenol formaldehyde resin or other curable resins followed by curing process. The substrate can also be a plastic sheet produced by extrusion or injection molding. If the ionomer of the nonwoven fabric has a good affinity with the substrate, the nonwoven fabric can be directly bonded to the substrate by hot pressing using a platen pressing machine, or by heat laminating using a hot rolling line. Otherwise, the nonwoven fabric can be bonded to the substrate using an adhesive film, a hot melt adhesive, a solvent based adhesive or a water based adhesive.

The spunbond nonwoven fabric herein possesses good puncture resistance, especially good puncture resistance at the temperature of about -40-0°C. Puncture resistance is a measure of the maximum puncture force required to penetrate the nonwoven fabric. The puncture resistance is measured using a sharp shaped puncture pendulum with a load of 6400 g and recorded in unit of "gf". A greater force needed to break the nonwoven fabric means that the puncture resistance is better.

Nonwoven composite comprising, consist essentially of, consist of, or are produced from the inventive spunbond nonwoven fabric of the present invention possesses good impact resistance, especially impact resistance at the temperature of about -40-0 °C. Impact resistance is a measure of the ability of the nonwoven composite to withstand the application of a sudden load without "failure". For the nonwoven composite consisting of multiple layers of nonwoven fabrics, the impact resistance is evaluated with impact energy (recorded in unit of "$kJ/m^2$"), as measured by unnotched Charpy test in according to IOS 179 at a predetermined temperature. The sample which does not break upon the impact displays higher impact resistance than the sample which breaks. If all the samples do not break upon impact, the one displaying higher impact energy means it has higher impact resistance. For the nonwoven composite consisting of a layer of nonwoven fabric and a substrate layer, the impact resistance is evaluated by the appearance of the composite after gravel impact. If the appearance of the nonwoven fabric side has only slightly indentation marks, no cracks, chipping, or crazing or any other functional degradations, the impact resistance is recorded as "good". On the contrary, if the nonwoven fabric side has significant indentation marks, or cracks, chipping, crazing or any other functional degradations, the impact resistance is recorded as "poor".

Nonwoven composites of the present invention are useful as impact resistant components of the automotive exterior parts such as bumpers or underbody shield.

Nonwoven composites of the present invention are also useful as impact resistant components in sport gears such as like elbow guards, shin guards, and surf board; impact resistant components in the footwear such as toe puff or heel counter; or main body of the suitcase.

Nonwoven composites of the present invention are especially useful as impact resistant components of equipment need to be used in cold weathers, or at temperature of about -40-0°C, for examples, skiing equipment such as ski board, snow sledge, or ski helmet.

Without further elaboration, it is believed that one skilled in the art using the preceding description can utilize the present invention to its fullest extent. The following examples are, therefore, to be construed as merely illustrative, and not limiting of the disclosure in any way whatsoever.

## EXAMPLES

The abbreviation "E" stands for "Example" and "CE" stands for "Comparative Example" is followed by a number indicating in which example the composite is prepared. The examples and comparative examples were all prepared and tested in a similar manner.

Materials

- I-1 ionomer of ethylene/methacrylic acid copolymer; MFR: 23 g/10 min; acid content in monomer:15 weight%; neutralization level: 14.8%; obtained from DuPont with tradename of Surlyn®AD8545;
- I-2: ionomer of ethylene/methacrylic acid copolymer; MFR:14 g/10 min; acid content in monomer:15 weight%; neutralization level: 22%; obtained from DuPont with tradename of Surlyn®1702;
- PA: polyamide 6, obtained from Wuxi Chang'an Polymer Company with grade of semi-dull fiber 1800-1;
- PE: high density polyethylene, obtained from Petro China Fushun Company with grade 2911FS;
- Substrate: self-expanded glass fiber reinforced thermoplastic sheet containing about 40 weight% of glass fibers and 60 weight% of polypropylenes, based on the total weight of the self-expanded glass fiber reinforced thermoplastic sheet, having a basis weight of about 1000 $g/m^2$.

Comparative Example CE1-CE4 and Example E1-E6:

In each of CE1-CE4 and E1-E6, spunbond nonwoven fabric was prepared on a spunbond line equipped with two extruders (one for sheath and one for core) and spinnerets of concentric design. For the nonwoven fabric of E1-E6, ionomer was loaded to the sheath extruder set at 220 °C, and PA was loaded to the core extruder set at 265 °C. Ionomer and PA were melted in each extruder and then extruded to the spin-pack set at 275 °C, and finally were ejected out of the spinnerets with concentric design. The resulting bicomponent fibers were subsequently passed through the slot-jet, where they were further attenuated by strong air flow, giving sheath-core structured fibers of diameter around 30 μm. These bicomponent fibers were subsequently laid down on a conveying belt, and hot-rolled by a pair of nip rolls with dot pattern (set at 70 °C), giving the final spunbond nonwoven fabric. For the nonwoven fabric of CE1-CE4, the process was essentially the same as above, except that the nip roll temperature was set at 120 °C, as the softening point of polyethylene (120 °C) is higher than that of ionomer (60~70 °C).

Composition of sheath and core of the bicomponent continuous fiber in each spunbond nonwoven fabric are shown in Table 1. Also listed in Table 1 is the basis weight, puncture force, normalized puncture force of each spunbond nonwoven fabric.

Comparative Example CE5-CE6 and Example E7-E12 :

In each of CE5-CE6 and E7-E12, nonwoven composite was prepared using hot pressing process, with the spunbond nonwoven fabric of Comparative Example CE2-CE3 and Example E1-E6 as the precursor, respectively. A platen pressing machine was used for the hot pressing. As each layer of these nonwoven fabrics had the dominant orientation in the machine direction, to get balanced structures, fiber orientation in these laminates was configured by simply rotating each layer with respect to its dominate orientation and placing it on top of the previous layer. The process was conducted in three steps: 1) the cross-layered nonwoven fabrics sandwiched within two release papers were placed between the upper and the lower plates (both set at 140 °C), and were preheated for 5 minutes with very low pressure applied to hold the shape, after which the upper and lower plates were opened to allow the sample to degas; 2) subsequently, a pressure of 4 MPa (40 bar) was applied to press the stacked nonwovens for about 10 minutes, during which the sheath layer should melt to form the matrix while the PA core fibers remained intact to provide the reinforcement; 3) finally, the hot sheet sample was transferred between two cold plates for cooling for about 2 minutes, and the nonwoven composite sheet could be obtained.

The number of nonwoven fabric layers needed to be stacked together is determined by the target thickness of the nonwoven composite and the basis weight of the precursor of nonwoven fabric. To produce nonwoven composite with thickness of about 4 mm, 27 layers of nonwoven fabric having basis weight of about 150 $g/m^2$, 22 layers of nonwoven fabric having basis weight of about 180 $g/m^2$, or 40 layers of nonwoven fabric having basis weight of about 100 $g/m^2$ nonwovens were used as precursor.

Compositions of each nonwoven composite are shown in Table 2. Also listed in Table 2 is the basis weight, impact energy at 23 °C and -40 °C, of each nonwoven composite.

Example E13 :

In E13, a nonwoven composite was prepared by heat laminating one layer of nonwoven fabric of E6 onto the substrate, a self-expanded glass fiber reinforced thermoplastic sheet. The nonwoven fabric was placed on top of the substrate to form an assembly. And the assembly were passed through a pair of nip rolls at about 140 °C, so that ionomer in the sheath was melted and bonded to the surface of the substrate, giving a nonwoven composite.

The impact resistance at 23°C and -29°C are shown in Table 3.

Test Method

Puncture test: the puncture force was measured using a Spencer pendulum puncture tester, in according to a modified ASTM 3480. A sharp end puncture pendulum was used with a load of 6400g. The pendulum was released and swung to hit the nonwoven fabric immobilized by an air-operated O-ring type clamp. The nonwoven fabric was ruptured, and the puncture force was recorded. To compare the puncture force of nonwoven fabric with various basis weight, puncture force was normalized using the equation:

$$\text{Normalized puncture force} = \text{Puncture force/Basis weight}$$

and the normalized puncture force is reported in unit of "gf/(g/m$^2$)".

Charpy impact test: the impact energy of the nonwoven composite in CE5-CE6 and E7-E12 was measured by unnotched Charpy test method (ISO 179) at 23 °C and -40 °C, respectively. Each sample was cut to 10 test specimens with the dimension of about 80 mm (length) $\times$ 10 mm (width) $\times$ 4 mm (thickness) and the impact direction was perpendicular to the plane defined by length and width. Herein all the samples in CE5-CE6 and E7-E12 did not break upon the impact, therefore the impact resistance is compared using the impact energy (recorded in unit of "kJ/m$^2$"), wherein higher impact energy means better impact resistance.

Gravel impact test: the nonwoven fabric side of the nonwoven composite in E13 was subjected to 100 kg of gravel impingement at 90° impact angle at 23 °C and -29 °C, respectively. After the gravel impact, the appearance of the nonwoven composite was visually examined and recorded. If the nonwoven fabric side has only slightly indentation marks, no cracks, chipping, or crazing or any other functional degradations, the impact resistance is designated as "good". On the contrary, if the nonwoven fabric side has significant indentation marks, or cracks, chipping, crazing or any other functional degradations, the impact resistance is designated as "poor".

**Table 1**

|  | CE1 | CE2 | CE3 | CE4 | E1 | E2 | E3 | E4 | E5 | E6 |
|---|---|---|---|---|---|---|---|---|---|---|
| Core | PA | PA | PA | PA | PA | PA | PA | PA | PA | PA |
| weight% | 70 | 70 | 60 | 60 | 70 | 67.5 | 65 | 60 | 55 | 60 |
| Sheath | PE | PE | PE | PE | I-1 | I-1 | I-1 | I-1 | I-1 | I-2 |
| weight% | 30 | 30 | 40 | 40 | 30 | 32.5 | 35 | 40 | 45 | 40 |
| Basis weight (g/m$^2$) | 100 | 150 | 100 | 150 | 100 | 100 | 150 | 150 | 150 | 180 |
| Puncture force(gf) | 1884 | 2825 | 1843 | 2402 | 2423 | 3138 | 3066 | 4675 | 3652 | 4265 |
| Normalized puncture force(gf/ (g/m$^2$)) | 18.8 | 18.8 | 18.4 | 16.0 | 24.2 | 31.4 | 20.4 | 31.2 | 24.4 | 23.7 |

From the results of Table 1, the following descriptions are evident.

Comparison between the puncture force data of E1 and CE1-CE2, the nonwoven fabric of E1 and CE1 or CE2 have same weight ratio between sheath and core, but different sheath component, the nonwoven fabric (E1) with ionomer/PA as sheath/core provides higher puncture force than the nonwoven fabric (CE1) with PE/PA as sheath/core; and the nonwoven fabric of E1 provides higher normalized puncture force than the nonwoven fabric of CE2. Analogously, comparison between the puncture force data of E4 and CE3-CE4, the nonwoven fabric of E4 and CE3 or CE4 have same weight ratio between sheath and core, but different sheath component, the nonwoven fabric (E4) with ionomer/PA as sheath/core provides higher puncture force than the nonwoven fabric (CE4) with PE/PA as sheath/core;' and the nonwoven fabric of E4 provides higher normalized puncture force than the nonwoven fabric of CE3. The nonwoven fabric with ionomer/PA provide improved puncture resistance than the nonwoven fabric with PE/PA.

In one embodiment, the spunbond nonwoven fabric of the present invention comprises a plurality of continuous bicomponent fibers having a sheath/core configuration, wherein ionomer of ethylene/(meth)acrylic acid copolymer forms the sheath and polyamide 6 forms the core, and the weight ratio between sheath and core is about 30:70 or about 40:60.

**Table 2**

|  | CE5 | CE6 | E7 | E8 | E9 | E10 | E11 | E12 |
|---|---|---|---|---|---|---|---|---|
| Precursor | CE2 | CE3 | E1 | E2 | E3 | E4 | E5 | E6 |
| Number of layers | 27 | 40 | 40 | 40 | 27 | 27 | 27 | 22 |
| Basis weight | 4050 | 4000 | 4000 | 4000 | 4050 | 4050 | 4050 | 3960 |
| Impact energy at 23 $_o$C (KJ/m$^2$) | 50.09 | 68.33 | 71.58 | 90.58 | 93.96 | 85.19 | 77.92 | 82.33 |
| Impact energy at -40°C (KJ/m$^2$) | 66.32 | 83.26 | 134.63 | 139.79 | 145.36 | 147.20 | 137.70 | 125.67 |

From the results of Table 2, the following descriptions are evident.

Comparison between the impact energy data of E7 and CE5, the nonwoven composite of E7 and CE5 have same basis weight and same weight ratio between sheath and core, but different sheath component, the nonwoven composite (E7) with ionomer/PA as sheath/core provides higher impact energy at 23°C than the nonwoven composite (CE5) with PE/PA as sheath/core; and nonwoven composite of E7 also provides higher impact energy at -40°C than that of CE5. Analogously, comparison between the puncture force data of E10 and CE6, the nonwoven composite of E10 and CE6 have same basis weight and same weight ratio between sheath and core, but different sheath component, the nonwoven composite (E10) with ionomer/PA as sheath/core provides higher impact energy at 23°C than the nonwoven composite (CE6) with PE/PA as sheath/core; and nonwoven composite of E10 also provides higher impact energy at -40°C than that of CE6. The nonwoven fabric with ionomer/PA provide improved impact resistance than the nonwoven fabric with PE/PA.

In one embodiment, the nonwoven composite of the present invention comprising 10-50 layers of the spunbond nonwoven fabric comprising a plurality of continuous bicomponent fibers having a sheath/core configuration, wherein ionomer of ethylene/(meth)acrylic acid copolymer forms the sheath and polyamide 6 forms the core, and the weight ratio between sheath and core is about 30:70 or about 40:60.

**Table 3**

| | E13 |
|---|---|
| Nonwoven fabric | F6 |
| Substrate | self-expanded glass fiber reinforced thermoplastic sheet |
| Impact resistance at 23 °C | good |
| Impact resistance e at -29 °C | good |

From the results of Table 3, the following descriptions are evident.

After the gravel impact at 23 °C or -29 °C, the appearance of the nonwoven composite was good, indicating that the impact resistance of the nonwoven composite comprising a layer of spunbond nonwoven fabric and a substrate layer is good.

In one embodiment, the nonwoven composite of the present invention comprising one layer of spunbond nonwoven fabric having a first side and a second side; and a self-expanded glass fiber reinforced thermoplastic sheet as substrate layer thermally bonded to the first side of the bicomponent spunbond nonwoven fabric, wherein the spunbond nonwoven fabric comprises a plurality of continuous bicomponent fibers having a sheath/core configuration, ionomer of ethylene/(meth)acrylic acid copolymer forms the sheath and polyamide 6 forms the core, the weight ratio between sheath and core is about 30:70 or about 40:60.

**Claims**

1. A spunbond nonwoven fabric comprising a plurality of continuous bicomponent fibers having a sheath/core configuration, wherein the sheath/core configuration consists of two polymers, wherein the first polymer is an ionomer of ethylene/(meth)acrylic acid copolymer that forms the sheath and the second polymer is a polyamide that forms the core.

2. The spunbond nonwoven fabric according to claim 1, wherein the ionomer of ethylene/(meth)acrylic acid copolymer has a melt flow rate of about 12-60 g/10 min, in accordance with ASTM D1238 at 190°C with a 2160 g load.

3. The spunbond nonwoven fabric according to claim 1, wherein the ionomer of ethylene/(meth)acrylic acid copolymer is neutralized by sodium cations or zinc cations with neutralization level ranging from about 0.1% to about 60%.

4. The spunbond nonwoven fabric according to claim 1, wherein the acid content in monomer of the ionomer of ethylene/(meth)acrylic acid copolymer is ranging from about 1 weight% to about 20 weight%.

5. The spunbond nonwoven fabric according to claim 1, wherein the weight ratio between sheath and core ranges from about 20:80 to about 50:50.

6. The spunbond nonwoven fabric according to claim 1, wherein the bicomponent continuous fiber has a diameter of about 1-100 $\mu$m.

7. The spunbond nonwoven fabric according to claim 1, wherein the polyamide is selected from the group consisting of polyamide 6, polyamide 66, and blends thereof.

8. The spunbond nonwoven fabric according to claim 1 which has a basis weight of about 10-1000 g/m$^2$.

9. A nonwoven composite comprising one layer of spunbond nonwoven fabric according to claim 1 having a first side and a second side; and a substrate layer bonded to the first side of the bicomponent spunbond nonwoven fabric.

10. A nonwoven composite comprising 2-100 layers of the spunbond nonwoven fabric according to claim 1.

**Patentansprüche**

1. Spinnvliesstoff, umfassend eine Vielzahl von kontinuierlichen Bikomponentenfasern, die eine Umhüllungs-/Kernkonfiguration aufweisen, wobei die Umhüllungs-/Kernkonfiguration aus zwei Polymeren besteht, wobei das erste Polymer ein Ionomer aus einem Ethylen/(Meth)Acrylsäure-Copolymer ist, das die Umhüllung ausbildet und das zweite Polymer ein Polyamid ist, das den Kern ausbildet.

2. Spinnvliesstoff nach Anspruch 1, wobei das Ionomer aus dem Ethylen/(Meth)Acrylsäure-Copolymer eine Schmelzflussrate von etwa 12-60 g/10 min gemäß ASTM D1238 bei190 °C mit einer Last von 2160 g aufweist.

3. Spinnvliesstoff nach Anspruch 1, wobei das Ionomer aus dem Ethylen/(Meth)Acrylsäure-Copolymer durch Natriumkationen oder Zinkkationen mit einem Neutralisationsgrad in einem Bereich von etwa 0,1 % bis etwa 60 % neutralisiert wird.

4. Spinnvliesstoff nach Anspruch 1, wobei der Säuregehalt in einem Monomer des Ionomers aus dem Ethylen/(Meth)Acrylsäure-Copolymer in dem Bereich von etwa 1 Gew.-% bis etwa 20 Gew.-% liegt.

5. Spinnvliesstoff nach Anspruch 1, wobei das Gewichtsverhältnis zwischen der Umhüllung und dem Kern in dem Bereich von etwa 20 : 80 bis etwa 50 : 50 liegt.

6. Spinnvliesstoff nach Anspruch 1, wobei die kontinuierliche Bikomponentenfaser einen Durchmesser von etwa 1-100 $\mu$m aufweist.

7. Spinnvliesstoff nach Anspruch 1, wobei das Polyamid aus der Gruppe ausgewählt ist, bestehend aus Polyamid 6, Polyamid 66 und Mischungen davon.

8. Spinnvliesstoff nach Anspruch 1, das ein Flächengewicht von etwa 10-1000 g/m$^2$ aufweist.

9. Ein Vliesverbundstoff, umfassend eine Schicht aus Spinnvliesstoff nach Anspruch 1, die eine erste Seite und eine zweite Seite aufweist; und eine Substratschicht, die an die erste Seite des Bikomponentenspinnvliesstoffes gebunden ist.

10. Vliesverbundstoff, umfassend 2-100 Schichten des Spinnvliesstoffes nach Anspruch 1.

**Revendications**

1. Étoffe non tissée filée-liée comprenant une pluralité de fibres bicomposantes continues ayant une configuration à gaine/âme, dans laquelle la configuration à gaine/âme est constituée de deux polymères, dans laquelle le premier polymère est un ionomère de copolymère d'éthylène/acide (méth)acrylique qui forme la gaine et le deuxième polymère est un polyamide qui forme l'âme.

2. Étoffe non tissée filée-liée selon la revendication 1, dans laquelle l'ionomère de copolymère d'éthylène/acide (méth)acrylique a un indice de fluidité à l'état fondu d'environ 12 à 60 g/10 min, conformément à ASTM D1238 à 190 °C avec une charge de 2160 g.

3. Étoffe non tissée filée-liée selon la revendication 1, dans laquelle l'ionomère de copolymère d'éthylène/acide (méth)acrylique est neutralisé par des cations sodium ou des cations zinc avec un niveau de neutralisation allant d'environ 0,1 % à environ 60 %.

4. Étoffe non tissée filée-liée selon la revendication 1, dans laquelle la teneur en acide dans un monomère de l'ionomère de copolymère d'éthylène/acide (méth)acrylique va d'environ 1 % en poids à environ 20 % en poids.

5. Étoffe non tissée filée-liée selon la revendication 1, dans laquelle le rapport pondéral entre la gaine et l'âme va d'environ 20:80 à environ 50:50.

6. Étoffe non tissée filée-liée selon la revendication 1, dans laquelle la fibre continue bicomposante a un diamètre d'environ 1 à 100 $\mu$m.

**7.** Étoffe non tissée filée-liée selon la revendication 1, dans laquelle le polyamide est choisi dans le groupe constitué de polyamide 6, polyamide 66, et mélanges de ceux-ci.

**8.** Étoffe non tissée filée-liée selon la revendication 1 qui a une masse surfacique d'environ 10 à 1000 g/m$^2$.

**9.** Composite non tissé comprenant une couche d'étoffe non tissée filée-liée selon la revendication 1 ayant un premier côté et un deuxième côté ; et une couche de substrat liée au premier côté de l'étoffe non tissée filée-liée bicomposante.

**10.** Composite non tissé comprenant 2 à 100 couches de l'étoffe non tissée filée-liée selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005020172 A1